# EUROPEAN PATENT SPECIFICATION

(11) **EP 3 093 124 B1**
(45) Date of publication and mention of the grant of the patent: **08.06.2022**
(21) Application number: 16165908.1
(22) Date of filing: 19.04.2016
(51) Int. Cl.: B29C 67/00, B33Y 10/00, B22F 3/24, B23K 101/00, B29C 64/40, C21D 9/00, B22F 10/20, B22F 10/40

(54) **IMPROVEMENTS IN ADDITIVE LAYER MANUFACTURING METHODS**
VERBESSERUNGEN AN VERFAHREN ZUR ADDITIVEN SCHICHTFERTIGUNG
AMÉLIORATIONS APPORTÉES À DES PROCÉDÉS DE FABRICATION ADDITIVE

(30) Priority: 11.05.2015 GB 201507984
(43) Date of publication of application: 16.11.2016
(73) Proprietor: Rolls-Royce plc, London N1 9FX (GB)
(72) Inventor: Jones, Simon, Derby, Derbyshire DE24 8BJ (GB); Mason-Flucke, Julian, Derby, Derbyshire DE24 8BJ (GB); Palumbo, Nunzio, Derby, Derbyshire DE24 8BJ (GB); Saunders, Ben, Derby, Derbyshire DE24 8BJ (GB); Manell, Rhys, Derby, Derbyshire DE24 8BJ (GB); Long, Kevin, Derby, Derbyshire DE24 8BJ (GB)
(74) Representative: Rolls-Royce plc

(56) References cited:
- EP-A2- 2 754 515
- WO-A1-2012/103603
- US-A1- 2013 112 366
- US-B1- 6 391 251

## Description

The invention relates to the manufacture of components using additive layer manufacturing methods. In particular, the invention provides methods which result in improved fracture resistance of the finished component.

Additive layer manufacturing (ALM) methods are known. In these methods a component is built up layer by layer until the 3D component is defined. In some ALM methods, the layers are laid down from a continuous extrusion of material. In other methods, layers are created by selective treatment of layers within a mass of particulate material, the treatment causing cohesion of selected regions of particulates into a solid mass. In other methods, a liquid mass is selectively treated to produce solid layers. Specific examples of ALM methods include (without limitation); electron beam melting (EBM), direct laser deposition (DLD), laser engineered net shaping (LNS), selective laser melting (SLM), direct metal laser sintering (DMLS) and selective laser sintering (SLS).

As will be appreciated, one of the advantages with ALM manufacturing techniques is that it can provide near net-shape components resulting in little waste which require subsequent additional machining. One exception to this may be the inclusion of supporting features or geometries which enable the components to be made. One particular application of ALM methods is in the formation of components for use in a gas turbine engine. It will be appreciated that, as well as accurate dimensional tolerances, such components must have excellent and consistent mechanical properties to prevent potentially catastrophic failure of the engine. Mechanical deficiencies in an ALM manufactured component can arise when residual stresses arising from the layering process result in a susceptibility to crack propagation from a surface of the component. The last laid layers of the component are most susceptible to fracture. If the last layer fails this impacts on the stress field in the underlying layer and the crack propagates. Surfaces which are inclined to the plane in which layers are laid down are also susceptible. Uneven distribution of stress between adjacent layers can result in delamination effects, cracks propagating between layers. These failures often only appear during a post ALM heat treatment step in the manufacture of the component.

European patent application EP 2754515 A2 discloses a method for manufacturing gas turbine engine components using additive manufacturing techniques. The method involves adding one or more crack resistant features to the design to eliminate the incidence of cracking during manufacturing.

United States patent application US 2013/0112366 A1 discloses a method of manufacturing a metal part by selective metaling a powder. The method incorporates manufacturing the component upon a support. The supports are completely separate from the component being manufactured.

International patent application WO 2012/103603 A1 discloses a method for manufacturing a thin walled structure in layers. This is achieved by building the layers together and annealing them before separating the layers.

Processes such as peening and shot blasting of the component surface can be used to induce compressive stresses in to the ALM manufactured component to discourage crack propagation during the subsequent heating operation.

The present invention provides a method for providing a component as set out in the appended claims.

The present invention provides a method for providing a component, the method comprising;
defining the geometry of the component,
defining a second geometry which incorporates a component geometry portion and a sacrificial geometry portion,
using an additive layer manufacturing (ALM) method permitting the deposition of multiple materials, manufacturing an intermediate having the second geometry, removing the sacrificial geometry portion, and
applying a heat treatment to the intermediate before removing the sacrificial geometry portion,
, and characterised in that the sacrificial geometry portion comprises a material which is more ductile than the materials of the component geometry portion.

In the second geometry, the sacrificial geometry portion is provided adjacent a surface of the component geometry portion which might otherwise be susceptible to crack propagation during the heat treatment. For example, the sacrificial geometry portion extends from the top (last laid) layer of the component geometry portion. In another example, the sacrificial geometry portion squares off a surface of the component geometry which is inclined to the plane in which layers are laid. In yet another example, the sacrificial geometry portion rounds off a tight radius of the component geometry portion.

The sacrificial geometry portion may take any of a wide range of forms each configured in general to spread residual stresses accruing in the component geometry to the sacrificial geometry.

The sacrificial geometry portion may be further configured with a weakness such that any failure arising in the intermediate as a consequence of the heat treatment step occurs in the sacrificial geometry portion in preference to the component geometry portion. For example (but without limitation) the weakness may, for example, comprise a notch, groove, sharp angle or rapidly changing cross sectional area.

The sacrificial geometry portion may be produced with an internal geometry designed to accommodate large plastic strains that might otherwise occur near the susceptible surface of the component geometry portion causing high residual stresses (and a susceptibility to cracking) in the component. For example, the internal geometry may have a lattice, honeycomb or wafer geometry or be porous. Such internal geometries will tend to deform or crack under residual stresses in preference to the component geometry.

The sacrificial geometry portion of the intermediate can be selectively engineered to have a more flawed structure by adjustment of the ALM process parameters. For example, when a DLD process is used, the material can be intentionally deposited to create a structure which is porous or contains a large number of micro cracks. This can be achieved by altering parameters which are otherwise optimised for a less flawed structure in the component geometry portion.

In ALM methods where the layers are created by selective treatment of layers within a mass of particulate material (for example, EBM), the sacrificial geometry portion can comprise an open structure such that the un-melted powder can be removed from the intermediate prior to any subsequent heat treatment. Alternatively, the sacrificial geometry portion comprises a closed structure such that a volume of un-melted powder is retained within its structure. In such embodiments, the low thermal conductivity un-melted powder acts as a thermal insulator, reducing cooling rates during deposition which should reduce the residual stress in the intermediate. These closed embodiments have further use in tuning heating rates within the intermediate during subsequent heat treatment processes to balance the relaxation of residual stresses in the component geometry portion with the microstructural changes that, if not so balanced, may cause ductility in the component portion to drop and increase the risk of cracking in the component geometry portion.

According to the claimed invention, the ALM process used permits the deposition of multiple materials in the intermediate (typically powder or wire feed systems), the sacrificial geometry portion 2. incorporates a material which is relatively more ductile than the material used to build the component geometry portion. As with other embodiments already described, the more ductile, sacrificial geometry portion of the intermediate can accommodate the large plastic strains that would otherwise occur near the susceptible surface of the component geometry portion and further mitigate the risk of crack initiation in the component geometry portion.

Where a component for ALM manufacture has a more complex geometry with multiple surfaces susceptible to crack propagation after a heating operation, a plurality of sacrificial geometry portions can be incorporated into an intermediate with the component geometry portion and all machined away after the heat treatment step.

Optionally, the component geometry portion can be built by a method other than an ALM method and an ALM method used to add the sacrificial geometry to the component geometry portion to form an intermediate prior to subsequent heat treating steps on the intermediate.

The method may further comprise a shot blasting, peening or pressing step performed after the manufacture of the intermediate and before the heat treatment step.

Direct laser deposition (DLD) is one useful ALM method to be used as the ALM process in the described methods of the invention. This process involves use of a laser as a heat source to deposit a metallic powder layer by layer for surface modification and fabrication of three-dimensional parts. The properties of the deposited layer, such as microstructure, hardness and dimensional accuracy determine the usage properties of the processed parts. The temperature and size of the melt pool, the cooling rate and the solidification conditions dominate the microstructure, hardness and dimensional accuracy. Many of these parameters can be controlled to influence the mechanical properties of the end product.

Embodiments of the invention will now be described with the aid of the following drawings of which:
Figure 1 shows an ALM manufactured component geometry and an intermediate manufactured in accordance with a first embodiment of the invention;
Figure 2 shows an intermediate manufactured in accordance with a second embodiment of the invention;
Figure 3 shows an intermediate manufactured in accordance with a third embodiment of the invention;
Figure 4 shows an intermediate manufactured in accordance with a fourth embodiment of the invention;
Figure 5 shows an intermediate manufactured in accordance with a fifth embodiment of the invention;
Figure 6 shows an intermediate manufactured in accordance with a sixth embodiment of the invention;
Figure 7 shows an intermediate manufactured in accordance with a seventh embodiment of the invention;
Figure 8 shows an intermediate manufactured in accordance with an eighth embodiment of the invention;
Figure 9 shows an intermediate manufactured in accordance with a ninth embodiment of the invention;
Figure 10 shows an intermediate manufactured in accordance with a tenth embodiment of the invention;
Figure 11 shows an intermediate manufactured in accordance with an eleventh embodiment of the invention;
Figure 12 shows an intermediate manufactured in accordance with a twelfth embodiment of the invention;
Figures 13 a, b, c and d show comparative stress fields experienced by the intermediate of Figure 12 and the component geometry portion of Figure 12.

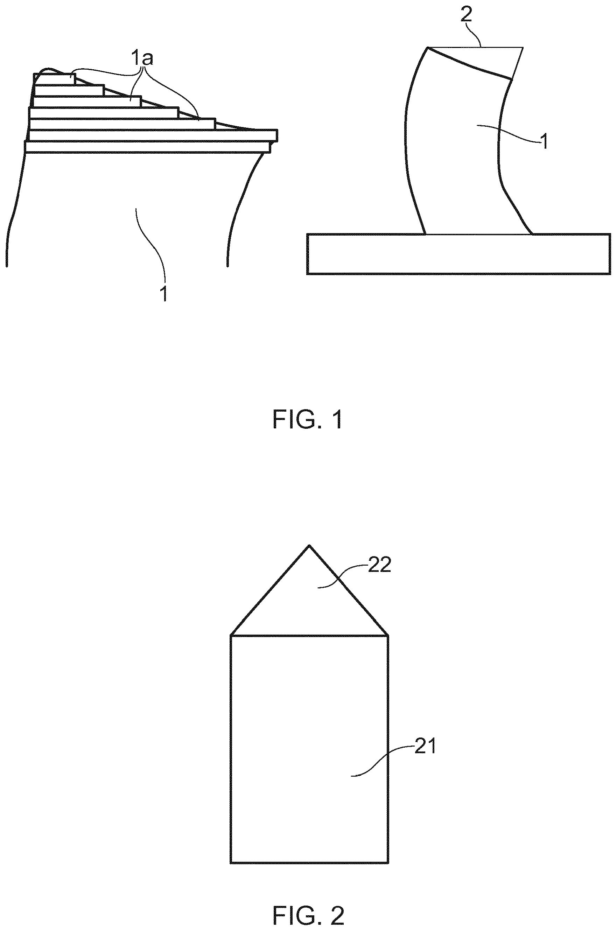

As can be seen in Figure 1, a component 1 has a base in a horizontal plane and a top in a plane which is inclined to the horizontal plane. The left hand figure shows schematically how the component has been built up in layers 1a using an ALM method. In the right hand figure, the unfinished component forms part of an intermediate which includes an additional sacrificial geometry portion 2. The sacrificial geometry portion 2 squares off the component geometry portion 1 to provide an intermediate having a top in a plane which is parallel to that of the component base. In a subsequent heating step, in preference to forming at the component geometry portion inclined surface, any cracks due to large plastic strains in the intermediate will accrue in the top surface of the sacrificial geometry portion 2 and can be removed in a further step in the manufacture of the component.

Figure 2 shows an intermediate comprising a component geometry portion 21 and a sacrificial geometry portion 22. In this embodiment not according to the claimed invention, the component geometry portion 21 has a top surface which is in alignment with the base and in parallel with the layers (not shown) which build up the intermediate. The sacrificial geometry portion 22 extends from the top surface of the component geometry portion 21 and diverges to a point. In a subsequent heating step, in preference to forming at the component geometry top surface, any cracks due to large plastic strains in the intermediate will accrue in the inclined surfaces of the sacrificial geometry portion 22 and can be removed.

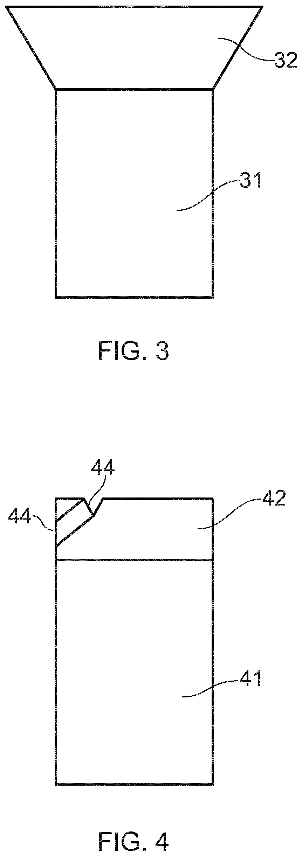

Figure 3 shows an intermediate comprising a component geometry portion 31 and a sacrificial geometry portion 32. In this embodiment not according to the claimed invention, the component geometry portion 31 has a top surface which is in alignment with the base and in parallel with the layers (not shown) which build up the intermediate. The sacrificial geometry portion 32 extends from the top surface of the component geometry portion 31 and diverges towards a top surface which is in alignment with the base and in parallel with the layers (not shown) which build up the intermediate.

This "flare" geometry spreads residual stress and increases the surface area of the top surface (relative to that of the component geometry portion), emulating the baseplate (ie stabilising the part). This gives a larger area which can be optionally peened and put into compressive stress. Residual compressive stresses below the top of the intermediate should arrest any cracks before they can propagate down into the component geometry portion. After a subsequent heating step, the sacrificial geometry portion 32 can be removed.

In Figure 4, an intermediate has a component geometry portion 41 similar in configuration to that shown in Figures 2 and 3. The sacrificial geometry portion 42 extends from the top surface of the component geometry portion with a broadly similar cross section to the component geometry portion 41. The sacrificial geometry portion 42 incorporates a notch 44 near a corner of the sacrificial geometry portion 42. The notch 42 serves to concentrate stresses accrued in the intermediate and initiate a crack to relieve the stresses. A crack initiated at the notch 44 runs through the sacrificial geometry portion 42 which can subsequently be removed preserving the integrity of the remaining component geometry portion 41.

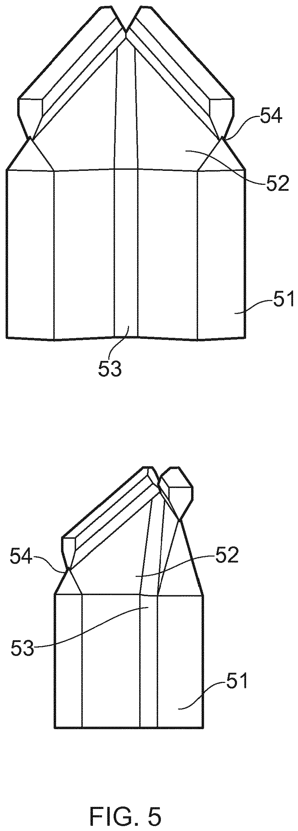

Figure 5 shows two views of a more complex embodiment of an intermediate not in accordance with the invention. As can be seen, the component geometry portion 51 has parallel base and top surfaces aligned in parallel with the layers used to construct the intermediate. The component geometry portion 51 defines an angle 53 between two sides. The sacrificial geometry portion 52 has a more complex geometry. The sacrificial geometry portion 52 has a top surface which generally inclines upwardly from a position distal to the angle towards a position proximal to the angle. Walls of the sacrificial geometry portion extend from the top of the sides of the component geometry portion 51 and diverge towards a narrow groove 54 and then flare out again towards the top surface of the sacrificial geometry portion 52. It will be appreciated the sacrificial geometry portion 52 essentially combines the angled geometry of the sacrificial geometry portion 22 in Figure 2 and the notch in sacrificial geometry portion 42 in Figure 4. Without the sacrificial geometry portion, the component geometry portion is susceptible to cracks at the top surface and in particular in the region of the angle.

The claimed invention does not preclude the use of other sacrificial elements required to manufacture the intermediate. Other sacrificial material commonly added to intermediate components such as support structures are utilised in various ALM processes to support the partly-built component structure during the manufacturing process and provide dimensional stability. These support structures need not infer any crack resisting properties to the component. The sacrificial geometry portion of the invention may combine or intersect with support structures as part of the design of the intermediate to enable over-hanging features to be added in a stable manner.

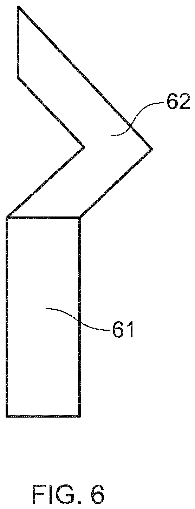

Figure 6 shows another embodiment of an intermediate not in accordance with the invention. In this embodiment, the component geometry portion 61 has a top surface which is in alignment with the base and in parallel with the layers (not shown) which build up the intermediate. The sacrificial geometry portion 62 extends upwards from the top surface of the portion 61 in a zig-zag formation. Much like the notch in previous embodiments, the angled section of the zig-zag serves to concentrate stresses accrued in the intermediate and initiate a crack to relieve the stresses.

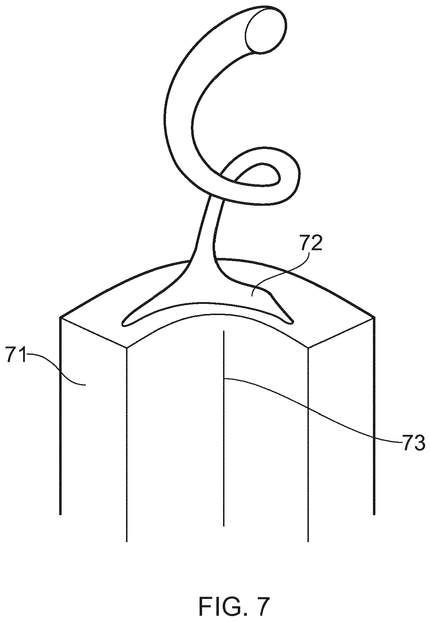

Figure 7 shows a more complex embodiment of an intermediate not in accordance with the invention. As can be seen, the component geometry portion 71 has parallel base and top portions aligned in parallel with the layers used to construct the intermediate. The component geometry portion 71 defines an angle 73 between two sides. Without the sacrificial geometry portion 72, the component geometry portion 71 is susceptible to cracks at the top surface and in particular in the region of the angle. The sacrificial geometry portion 72 extends from the top of the component geometry portion 71 adjacent the angle and has a "pig-tail" configuration. Much like the notches in previous embodiments, the turns and narrowing cross sections in the pig-tail serve to concentrate stresses accrued in the intermediate and initiate a crack to relieve the stresses in the intermediate.

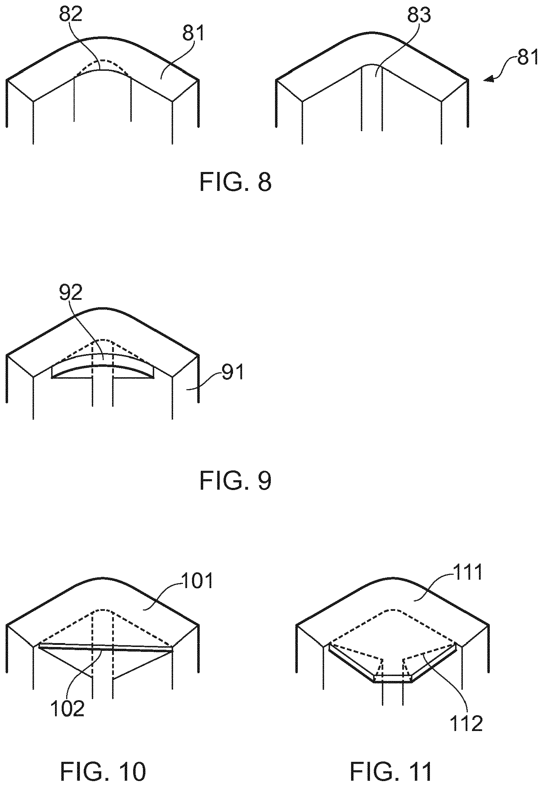

Figure 8 shows an intermediate not in accordance with the invention comprising a component geometry portion 81 and a sacrificial geometry portion 82. In this simple arrangement, the component geometry portion 81 has parallel base and top surfaces aligned in parallel with the layers used to construct the intermediate. The component geometry portion 81 defines an angle 83 between two sides. The angle has a very tight radius. The sacrificial geometry portion rounds off the tight radius spreading the stresses which might, in the absence of the sacrificial geometry portion, result in a susceptibility to cracking in the tight radius of the component geometry portion 81. Figures 9, 10 and 11 show alternative sacrificial geometry portions 92, 102 and 112 for similarly shaped component geometry portions 91, 101 and 111. It will be understood from these Figures that the sacrificial geometry portion can include a sacrificial support structure to enable construction of the residual stress reducing component. The sacrificial support structure need not be provided using an ALM process and could be integrally formed with the component geometry or in an additional step in the manufacture of the intermediate.

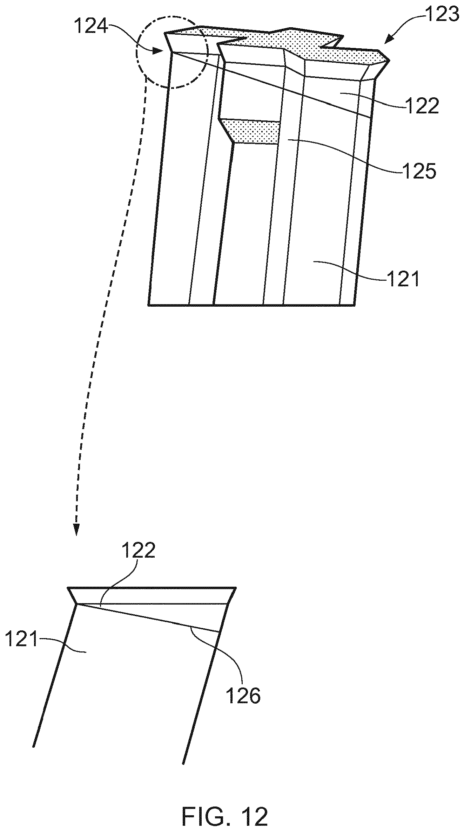

Figure 12 shows an intermediate of more complex design. The intermediate comprises a cast component geometry portion 121 on to an inclined top surface 126 of which a sacrificial geometry portion 122 is deposited using an extrusion ALM method. The sacrificial geometry portion 122 squares off the inclined surface to form a flat surface 123. A top section 124 of the sacrificial geometry portion 122 is flared. An angled seal strip land 125 is ramped to support the sacrificial geometry build.

The flat surface 123 of the sacrificial geometry portion permits a full final pass of an ALM extrusion laser in building the sacrificial geometry portion 122, reducing the susceptibility of this surface to cracking. The flared portion 123 provides an increased surface area to which a peening, pressing or blasting operation can be applied with the effect of putting the intermediate into compressive stress. This peening, pressing or blasting operation further reduces the susceptibility of surfaces of the final component to cracking. For example a pressing operation might comprise hot isostatic pressing (HIPing). It will appreciated that HIPing can serve both to induce compressive stress and simultaneously perform the heating step of the method.

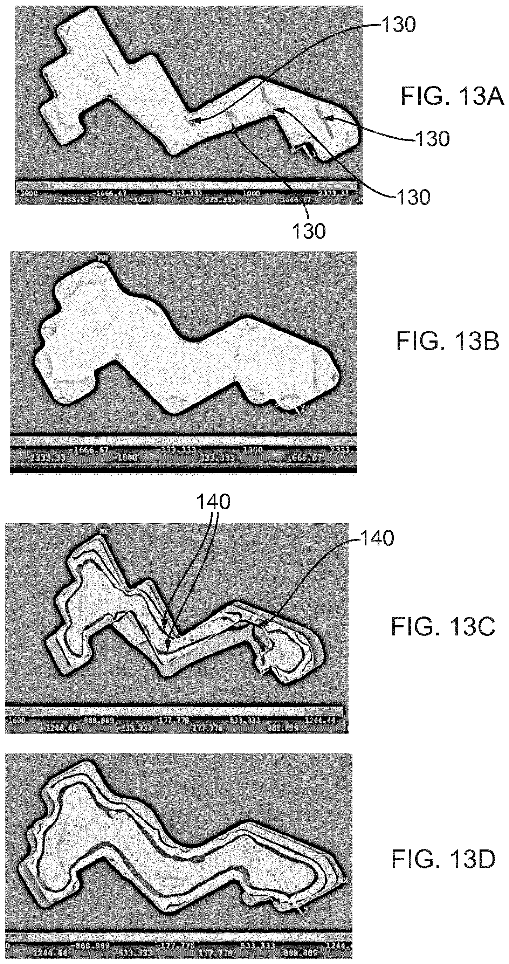

Figure 13 a and b show residual stress fields respectively for;
a. The inclined top surface 126 of the component geometry portion in the absence of the sacrificial geometry portion 122
b. The top surface 123 of the intermediate

Figures 13 c and d show the main body stress state for;
c. The component geometry portion in the absence of the sacrificial geometry portion 122
d. The intermediate.

As can be seen from a comparison of Figures 13a and 13b, residual stress fields 130 accruing particularly near tight radii and inclined surfaces in the component geometry portion (Fig. 13a) absent the sacrificial geometry portion are alleviated when the sacrificial geometry portion is added to the component geometry portion (Fig. 13b). In the intermediate, the higher stresses are concentrated within the outer edges of the sacrificial geometry which is subsequently removed in the manufacture of the component in accordance with the invention.

As can be seen from a comparison of Figures 13c and 13d, the main body stress state in the component geometry portion (Fig. 13a) absent the sacrificial geometry portion shows near coinciding peaks 140 near narrow and angled sections. These are substantially alleviated when the sacrificial geometry portion is added to the component geometry portion (Fig. 13d), peak stresses arising adjacent the flared edges of the sacrificial geometry portion which is subsequently removed in the manufacture of the component in accordance with the invention.

## Claims

1. A method for providing a component, the method comprising;
defining the geometry of the component,
defining a second geometry which incorporates a component geometry portion (1) and a sacrificial geometry portion (2),
using an additive layer manufacturing, ALM, method permitting the deposition of multiple materials, manufacturing an intermediate having the second geometry, removing the sacrificial geometry portion (2), and
applying a heat treatment to the intermediate before removing the sacrificial geometry portion (2),
wherein the sacrificial geometry portion (2) comprises a material which is more ductile than the materials of the component geometry portion (1).

2. A method as claimed in claim 1 wherein the internal geometry configuration comprises any one or a combination of; a lattice, a honeycomb, a wafer geometry or porosity.

3. A method as claimed in claim 1 or 2 wherein the intermediate is manufactured entirely using an ALM process and the parameters of the ALM process are adjusted to provide different material properties in the sacrificial geometry portion (2) versus the component geometry portion (1).

4. A method as claimed in any preceding claim wherein the ALM method involves selective treatment of layers within a mass of particulate material to form solid product and wherein the sacrificial geometry portion (2) comprises an open structure allowing untreated particulate material to be removed from the intermediate prior to any subsequent heat treatment.

5. A method as claimed in any preceding claim wherein the ALM method involves selective treatment of layers within a mass of particulate material to form solid product and wherein the sacrificial geometry portion (2) comprises a closed structure allowing untreated particulate material to be retained in the sacrificial geometry portion during the subsequent heat treatment step.

6. A method as claimed in any preceding claim wherein the sacrificial geometry portion (2) has a flared configuration which serves to increase the surface area of a surface of the intermediate relative to the surface of the component geometry portion (1).

7. A method as claimed in any preceding claim further comprising a step of applying compressive stress to the intermediate prior to the heating step.

8. A method as claimed in any preceding claim wherein the intermediate comprises a component geometry portion (1) and multiple sacrificial geometry portions (2) arranged on multiple surfaces of the component geometry portion.

9. A method as claimed in any preceding claim wherein all or part of the component geometry portion (1) is provided using a process other than an ALM process and the sacrificial geometry portion is added using an ALM process.

## Patentansprüche

1. Verfahren zum Bereitstellen einer Komponente, das Verfahren umfassend;
Definieren der Geometrie der Komponente,
Definieren einer zweiten Geometrie, die einen Komponentengeometrieabschnitt (1) und einen Opfergeometrieabschnitt (2) integriert,
Verwenden eines Verfahrens einer additiven Schichtherstellung, ALM, das die Abscheidung vielfacher Materialien ermöglicht, Herstellen eines Zwischenprodukts, das die zweite Geometrie aufweist, Entfernen des Opfergeometrieabschnitts (2) und
Anwenden einer Wärmebehandlung auf das Zwischenprodukt vor Entfernen des Opfergeometrieabschnitts (2),
wobei der Opfergeometrieabschnitt (2) ein Material umfasst, das duktiler ist als die Materialien des Komponentengeometrieabschnitts (1).

2. Verfahren nach Anspruch 1, wobei die innere Geometriekonfiguration eine oder eine Kombination aus einem Gitter, einer Wabe, einer Wafer-Geometrie oder Porosität umfasst.

3. Verfahren nach Anspruch 1 oder 2, wobei das Zwischenprodukt vollständig unter Verwendung eines ALM-Verfahrens hergestellt wird und die Parameter des ALM-Verfahrens eingestellt sind, um unterschiedliche Materialeigenschaften in dem Opfergeometrieabschnitt (2) versus dem Komponentengeometrieabschnitt (1) bereitzustellen.

4. Verfahren nach einem der vorherigen Ansprüche, wobei das ALM-Verfahren eine selektive Behandlung von Schichten innerhalb einer Masse aus teilchenförmigem Material involviert, um ein festes Produkt zu bilden, und wobei der Opfergeometrieabschnitt (2) eine offene Struktur umfasst, die es ermöglicht, unbehandeltes teilchenförmiges Material aus dem Zwischenprodukt vor einer nachfolgenden Wärmebehandlung zu entfernen.

5. Verfahren nach einem der vorherigen Ansprüche, wobei das ALM-Verfahren eine selektive Behandlung von Schichten innerhalb einer Masse aus teilchenförmigem Material involviert, um ein festes Produkt zu bilden, und wobei der Opfergeometrieabschnitt (2) eine geschlossene Struktur aufweist, die es ermöglicht, dass unbehandeltes teilchenförmiges Material während des nachfolgenden Wärmebehandlungsschritts in dem Opfergeometrieabschnitt zurückgehalten wird.

6. Verfahren nach einem der vorherigen Ansprüche, wobei der Opfergeometrieabschnitt (2) eine aufgeweitete Konfiguration aufweist, die dazu dient, den Oberflächenbereich einer Oberfläche des Zwischenprodukts im Verhältnis zu der Oberfläche des Komponentengeometrieabschnitts (1) zu vergrößern.

7. Verfahren nach einem der vorherigen Ansprüche, ferner umfassend einen Schritt eines Anwendens von Druckspannung auf das Zwischenprodukt vor dem Erhitzungsschritt.

8. Verfahren nach einem der vorherigen Ansprüche, wobei das Zwischenprodukt einen Komponentengeometrieabschnitt (1) und mehrere Opfergeometrieabschnitte (2) umfasst, die auf vielfachen Oberflächen des Komponentengeometrieabschnitts angeordnet sind.

9. Verfahren nach einem der vorherigen Ansprüche, wobei der gesamte oder ein Teil des Komponentengeometrieabschnitts (1) unter Verwendung eines anderen Verfahrens als eines ALM-Verfahrens bereitgestellt wird und der Opfergeometrieabschnitt unter Verwendung eines ALM-Verfahrens hinzugefügt wird.

## Revendications

1. Procédé de fourniture d'un composant, le procédé comprenant ;
la définition de la géométrie du composant, la définition d'une deuxième géométrie qui incorpore une partie de géométrie de composant (1) et une partie de géométrie sacrificielle (2), en utilisant une fabrication de couche additive, ALM,
un procédé permettant le dépôt de plusieurs matériaux, la fabrication d'un intermédiaire ayant la deuxième géométrie, le retrait de la partie de géométrie sacrificielle (2), et
l'application d'un traitement thermique à l'intermédiaire avant de retirer la partie de géométrie sacrificielle (2),
dans lequel la partie de géométrie sacrificielle (2) comprend un matériau qui est plus ductile que les matériaux de la partie de géométrie de composant (1).

2. Procédé selon la revendication 1, dans lequel la configuration géométrique interne comprend l'un quelconque ou une combinaison de ; un maillage, un nid d'abeilles, une géométrie ou une porosité de plaquette.

3. Procédé selon la revendication 1 ou 2, dans lequel l'intermédiaire est entièrement fabriqué à l'aide d'un processus ALM et les paramètres du processus ALM sont ajustés pour fournir des propriétés de matériau différentes dans la partie de géométrie sacrificielle (2) par rapport à la partie de géométrie de composant (1).

4. Procédé selon une quelconque des revendications précédentes, dans lequel le procédé ALM implique un traitement sélectif de couches dans une masse de matériau particulaire pour former un produit solide et dans lequel la partie de géométrie sacrificielle (2) comprend une structure ouverte permettant d'éliminer le matériau particulaire non traité de l'intermédiaire avant tout traitement thermique ultérieur.

5. Procédé selon une quelconque des revendications précédentes, dans lequel le procédé ALM implique un traitement sélectif de couches dans une masse de matériau particulaire pour former un produit solide et dans lequel la partie de géométrie sacrificielle (2) comprend une structure fermée permettant à un matériau particulaire non traité d'être retenu dans la partie de géométrie sacrificielle au cours de l'étape de traitement thermique ultérieure.

6. Procédé selon une quelconque des revendications précédentes, dans lequel la partie de géométrie sacrificielle (2) présente une configuration évasée qui sert à augmenter la superficie d'une surface de l'intermédiaire par rapport à la surface de la partie de géométrie de composant (1).

7. Procédé selon une quelconque des revendications précédentes, comprenant en outre une étape d'application d'une contrainte de compression à l'intermédiaire avant l'étape de chauffage.

8. Procédé selon une quelconque des revendications précédentes, dans lequel l'intermédiaire comprend une partie de géométrie de composant (1) et de multiples parties de géométrie sacrificielle (2) agencées sur de multiples surfaces de la partie de géométrie de composant.

9. Procédé selon une quelconque des revendications précédentes, dans lequel tout ou partie de la partie de géométrie de composant (1) est fournie en utilisant un processus autre qu'un processus ALM et la partie de géométrie sacrificielle est ajoutée en utilisant un processus ALM.
